# FASCICULE DE BREVET EUROPEEN

(11) **EP 4 540 500 B1**
(45) Date de publication et mention de la délivrance du brevet: **25.03.2026**
(21) Numéro de dépôt: 23738825.1
(22) Date de dépôt: 16.06.2023
(51) Int. Cl.: F01D 5/14, F01D 5/28, F01D 21/04

(54) **AUBE A STRUCTURE COMPOSITE PRESENTANT UNE ORIENTATION DE SORTIE DE COUCHE AMELIOREE**
SCHAUFEL MIT VERBUNDSTRUKTUR MIT VERBESSERTER LAGENTROPFENAUSRICHTUNG
BLADE WITH COMPOSITE STRUCTURE HAVING IMPROVED PLY DROP ORIENTATION

(30) Priorité: 16.06.2022 FR 2205893
(43) Date de publication de la demande: 23.04.2025
(73) Titulaire: SAFRAN AIRCRAFT ENGINES, 75015 Paris (FR)
(72) Inventeur: GONDRE, Guillaume Pascal Jean-Charles, 77550 MOISSY-CRAMAYEL (FR); BASSOT, Alain Jacques Michel, 77550 MOISSY-CRAMAYEL (FR)
(74) Mandataire: Regimbeau
(86) Numéro de dépôt international: PCT/FR2023/050880
(87) Numéro de publication internationale: WO 2023/242522

(56) Documents cités:
- EP-A1- 3 292 991
- US-A- 5 279 892
- US-A1- 2016 076 552

## Description

### DOMAINE DE L'INVENTION

La présente invention concerne une aube pour soufflante de turbomachine, du type comprenant un pied configuré pour être inséré dans une alvéole d'un disque de soufflante, une pale propre à s'étendre dans un flux d'air et définissant une tête d'aube opposée au pied, et une échasse reliant le pied à la pale, l'aube présentant un intrados, un extrados, un bord d'attaque et un bord de fuite, l'aube étant allongée suivant une direction longitudinale allant du pied à la tête d'aube, ladite direction longitudinale étant sensiblement orthogonale à une direction de corde allant du bord d'attaque au bord de fuite, l'aube étant composée au moins en partie d'une structure en matériau composite comportant un renfort fibreux obtenu par tissage tridimensionnel et une matrice dans laquelle est noyé le renfort fibreux, le renfort fibreux comprenant une pluralité de couches entremêlées, chaque couche étant formée de torons de chaîne s'étendant sensiblement orthogonalement à la direction de corde et de torons de trame s'étendant sensiblement orthogonalement à la direction longitudinale, les torons de chaîne et les torons de trame incluant des torons incomplets présentant chacun une extrémité terminale à l'intrados ou à l'extrados, l'intrados et/ou l'extrados présentant des lignes de sortie de couche reliant chacune les extrémités terminales des torons incomplets d'une même couche.

L'invention concerne également une soufflante de turbomachine comprenant une pluralité d'aubes du type précité, une turbomachine comprenant une telle soufflante, et un aéronef comprenant une telle turbomachine.

### ARRIERE-PLAN TECHNOLOGIQUE

Les aubes de turbomachine, et notamment les aubes de soufflante, subissent d'importantes contraintes mécaniques et thermiques et doivent satisfaire à des conditions strictes de poids et d'encombrement. Il a donc été proposé d'utiliser des aubes composées au moins en partie d'une structure en matériau composite comportant un renfort fibreux densifié par une matrice polymère, qui sont plus légères par rapport à des aubes métalliques à caractéristiques propulsives équivalentes et qui ont une tenue à la chaleur satisfaisante.

De telles aubes sont par exemple connues de EP 1 526 285.

Le plus souvent, les aubes ont une épaisseur allant décroissante de l'échasse jusqu'à la tête d'aube. Elles s'affinent également vers le bord d'attaque et vers le bord de fuite. Pour obtenir cette épaisseur décroissante avec une aube composée d'une structure en matériau composite, on réduit généralement le nombre de couches composant ladite structure à mesure que l'on se rapproche de la tête d'aube, du bord d'attaque et du bord de fuite. Pour ce faire, les torons formant ces couches sont sortis de la structure et interrompus le long de lignes de sortie de couche à l'intrados ou à l'extrados, comme décrit par exemple dans EP 3 292 991.

Lors de la vie d'un moteur, les aubes de soufflante sont soumises à des impacts d'oiseaux et de grêlons. Les règles de certification des moteurs d'aéronefs imposent donc logiquement une certaine résistance des aubes de soufflante à ce type d'impacts. Cependant, la résistance des aubes à structure composite à de tels impacts tend à différer de celle de leurs équivalentes métalliques. Pour respecter les règles de certification, les aubes à structure composite sont donc souvent plus épaisses, ce qui peut rendre plus complexe la conception pour gérer les performances aérodynamiques de l'aube et pourrait neutraliser en partie le gain de poids résultant de l'utilisation de matériau composite.

Des solutions ont été proposées, par exemple dans EP 3 292 991, WO 2020/089345 et FR 3 087 711, pour résoudre ce type de problème et améliorer le comportement mécanique des aubes à structure composite face à tels impacts. Ces solutions peuvent donner satisfaction mais peuvent aussi mériter des optimisations.

### EXPOSE DE L'INVENTION

Un objectif de l'invention est d'améliorer le comportement mécanique des aubes à structure composite en cas d'impact d'oiseau ou de grêlons.

A cet effet, l'invention a pour objet, selon un premier aspect, une aube pour soufflante de turbomachine du type précité, dans laquelle au moins une ligne de sortie de couche inclut au moins une portion transversale située entre le pied et 70% de hauteur d'aube, dont une portion de sommet, la ou chaque portion transversale s'étendant globalement suivant une direction transversale sensiblement orthogonale à la tangente locale aux torons de chaîne, la ou chaque portion de sommet s'étendant sur au plus 10% de la distance entre le bord d'attaque et le bord de fuite mesurée parallèlement à la direction transversale.

Selon des modes de réalisation particuliers de l'invention, l'aube présente également l'une ou plusieurs des caractéristiques suivantes, prise(s) isolément ou suivant toute(s) combinaison(s) techniquement possible(s) :
- la ou chaque portion transversale située entre le pied et 70% de hauteur d'aube s'étend sur au plus 10% de la distance entre le bord d'attaque et le bord de fuite mesurée parallèlement à la direction transversale ;
- le nombre de lignes de sortie de couche à l'intrados est supérieur au nombre de lignes de sortie de couche à l'extrados dans une région basse de l'aube comprise entre le pied et 30% de hauteur d'aube et/ou dans une région étendue de l'aube comprise entre le pied et 70% de hauteur d'aube ;
- le nombre de lignes de sortie de couche à l'intrados est, sur l'ensemble de l'aube, supérieur au nombre de lignes de sortie de couche à l'extrados ;
- au moins une ligne de sortie de couche comprend une portion terminale qui s'étend depuis la tête d'aube jusqu'à 90% de hauteur d'aube, avantageusement jusqu'à 60% de hauteur d'aube , la ou chaque portion terminale s'étendant globalement suivant une direction d'extension formant un angle compris entre 5° et 85° avec la tangente locale aux torons de chaîne ;
- pour la ou chaque portion terminale, la direction d'extension forme un angle compris entre 5° et 85° avec la tangente locale aux torons de trame ;
- au moins une portion terminale est constituée par une portion terminale inclinée dont la direction d'extension forme un angle compris entre 10° et 65°, avantageusement compris entre 15° et 45°, avec la tangente locale aux torons de chaîne ;
- pour la ou chaque portion terminale inclinée, la direction d'extension forme un angle compris entre 25° et 80°, avantageusement compris entre 45° et 75° , avec la tangente locale aux torons de trame ;
- une majorité des portions terminales sont constituées par des portions terminales inclinées ;
- l'aube comprend un bouclier rapporté recouvrant la structure composite le long du bord d'attaque, le bouclier présentant un bord aval à l'intrados et un bord aval à l'extrados, la ou chaque portion terminale côté intrados remplissant au moins l'un des critères suivants en chacun de ses points :
   ∘ la portion terminale est espacée du bord aval à l'intrados d'une distance supérieure ou égale au triple de la largeur de maille du renfort fibreux, et
   ∘ la tangente à la portion terminale forme un angle supérieur ou égal à 5°, avantageusement supérieur ou égal à 15°, avec la tangente au bord aval à l'intrados à hauteur dudit point,
   et la ou chaque portion terminale côté extrados remplissant au moins l'un des critères suivants en chacun de ses points :
      ∘ la portion terminale est espacée du bord aval à l'extrados d'une distance supérieure ou égale au triple de la largeur de maille du renfort fibreux, et
      ∘ la tangente à la portion terminale forme un angle supérieur ou égal à 5°, avantageusement supérieur ou égal à 15°, avec la tangente au bord aval à l'extrados à hauteur dudit point.

L'invention a également pour objet, selon un deuxième aspect, une soufflante de turbomachine comprenant une pluralité d'aubes telles que définies ci-dessus.

L'invention a encore pour objet, selon un troisième aspect, une turbomachine comprenant une telle soufflante.

Enfin, selon un quatrième aspect, l'invention a pour objet un aéronef comprenant une telle turbomachine.

### BREVE DESCRIPTION DES FIGURES

D'autres caractéristiques et avantages de l'invention apparaîtront à la lecture de la description qui va suivre, donnée uniquement à titre d'exemple et faite en se référant aux dessins annexés, dans lesquels :
- la Figure 1 est une vue de dessus d'un aéronef selon un exemple de réalisation de l'invention,
- la Figure 2 est une vue en perspective, de trois-quarts avant, d'une turbomachine de l'aéronef de la Figure 1,
- la Figure 3 est une vue de côté d'une aube de soufflante de la turbomachine de la Figure 2,
- la Figure 4 est une vue simplifiée en coupe selon un plan marqué IV-IV sur la Figure 3,
- la Figure 5 est une vue en perspective, de trois-quarts avant, d'une structure en matériau composite de l'aube de la Figure 3,
- la Figure 6 est une vue en perspective, de trois-quarts arrière, de la structure en matériau composite de la Figure 5,
- la Figure 7 est une vue simplifiée en coupe, selon un plan marqué VII-VII sur la Figure 6, d'une partie de la structure en matériau composite,
- la Figure 8 est une vue d'un détail marqué VIII de la Figure 4, et
- la Figure 9 est une vue d'un détail marqué IX de la Figure 7.

### DESCRIPTION DETAILLEE

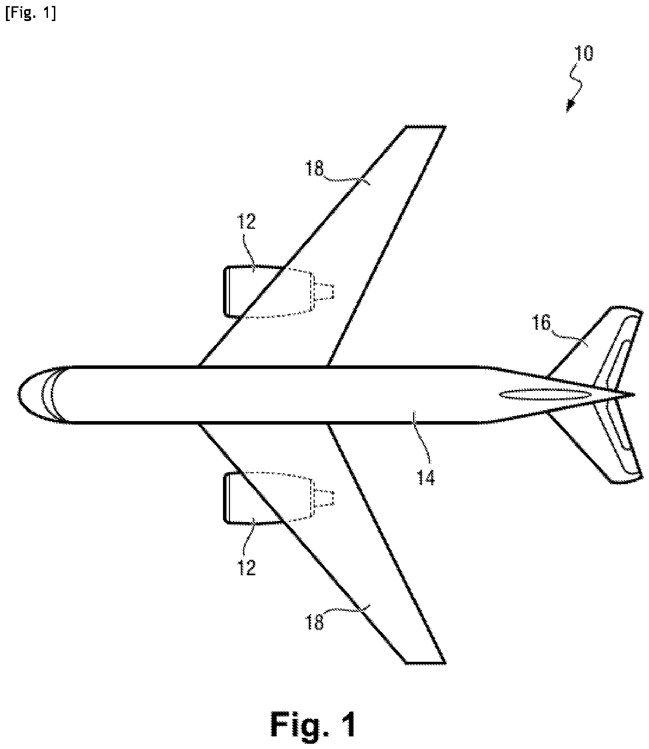

L'aéronef 10 représenté sur la Figure 1 comprend des turbomachines 12 pour le propulser.

Dans l'exemple représenté, l'aéronef 10 est un avion. Celui-ci comprend, de manière classique, un fuselage 14, un empennage 16 et deux ailes 18. Les turbomachines 12 sont ici au nombre de deux et sont chacune logées sous une aile 18 respective. En variante (non représentée), les turbomachines 12 sont disposées le long du fuselage 14, par exemple à proximité de l'empennage 16. En variante encore (également non représentée), l'aéronef 10 comprend une seule turbomachine 12 ou au moins trois turbomachines 12.

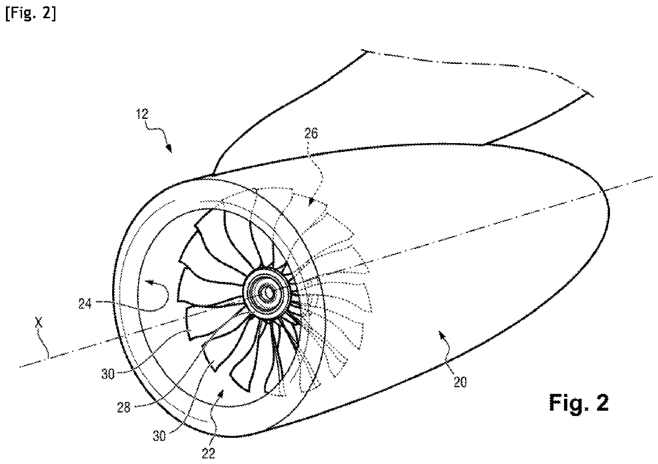

L'une des turbomachines 12 est représentée sur la Figure 2. Comme visible sur cette Figure, elle comprend une nacelle 20 destinée à être fixée à une aile 18 ou au fuselage 14 de l'aéronef 10, une soufflante 22 et un carénage 24 entourant la soufflante 22. Elle comprend également, de manière classique, un compresseur, une chambre de combustion et une turbine (non représentés), la turbine étant reliée mécaniquement à la soufflante 22 pour l'entraîner en rotation autour de son axe.

La turbomachine 12 est typiquement un turboréacteur à double flux, avantageusement à fort taux de dilution.

Le carénage 24 délimite la veine d'air. Il est monté fixe sur la nacelle 20. Dans l'exemple illustré, il est disposé à l'intérieur de la nacelle 20. En variante (non représentée), la turbomachine 12 est dépourvue de carénage.

La soufflante 22 comprend un rotor de soufflante 26 propre à être entrainé en rotation par rapport à la nacelle 20 autour d'un axe de rotation X qui coïncide ici avec l'axe principal de la turbomachine 12. Le rotor de soufflante 26 comprend un moyeu 28, communément appelé « disque de soufflante », et une pluralité d'aubes 30 fixées au moyeu 28 et s'étendant selon des directions sensiblement radiales à partir du moyeu 28. Dans l'exemple représenté, les aubes 30 sont toutes identiques, et agencées avec un écart angulaire constant entre deux aubes 30 successives.

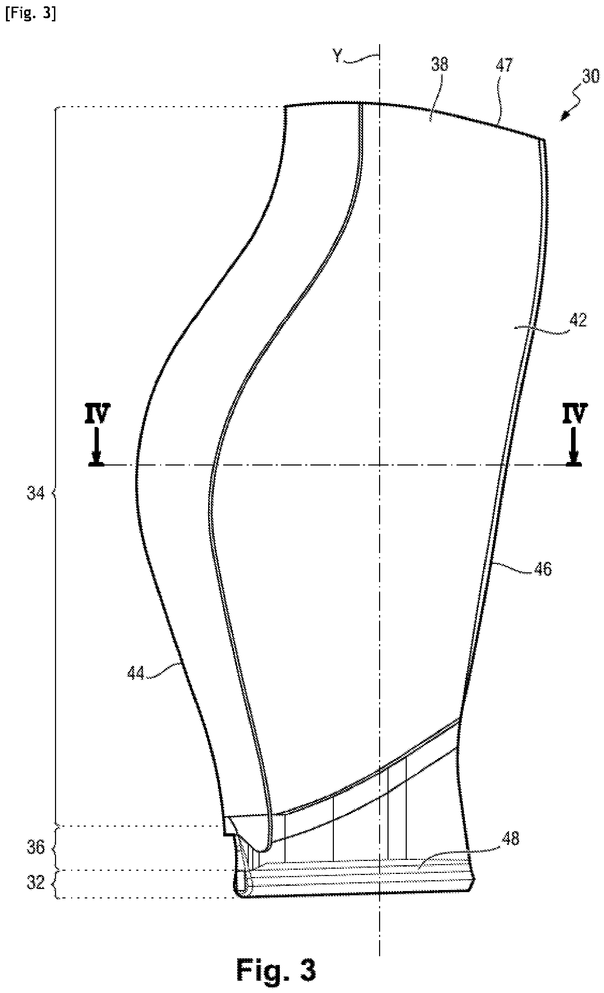

La figure 3 illustre de manière schématique l'une de ces aubes 30. Cette aube 30 comprend un pied 32, une pale 34 à profil aérodynamique et une échasse 36.

Le pied 32 est destiné à permettre la fixation de l'aube 30 au moyeu 28, par exemple par le biais d'une attache brochée (non représentée). A cet effet, le pied 32 est configuré pour être inséré dans une alvéole (non représentée) du moyeu 28.

Dans l'exemple représenté, le pied 32 est en forme de queue d'aronde. En variante (non représentée), le pied 32 présente toute forme adaptée pour permettre l'assemblage de l'aube 30 au moyeu 28.

La pale 34 est propre à être placée dans un flux d'air, lorsque la turbomachine 12 est en fonctionnement, afin de générer une portance. Elle définit, à son extrémité opposée au pied 32, une tête d'aube 38.

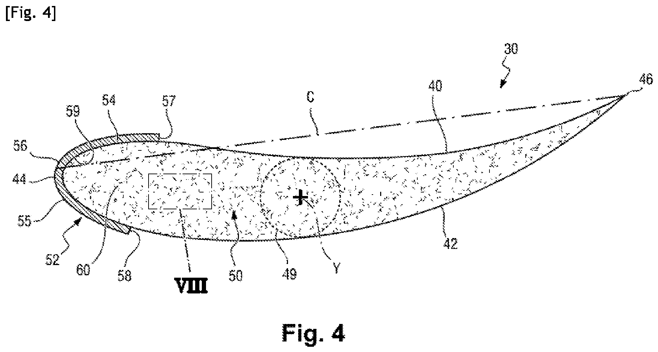

La pale 34 présente par ailleurs un intrados 40 (Figure 4), un extrados 42, un bord d'attaque 44 et un bord de fuite 46.

La pale 34 présente encore un bord de tête d'aube 47, constitué par le bord libre de l'aube 30 le plus éloigné du pied 32. Le bord de tête d'aube 47 est propre à s'étendre le long d'une surface interne du carénage 24 entourant la soufflante.

L'échasse 36 correspond à la zone de l'aube 30 qui s'étend entre le pied 32 et la pale 34, c'est-à-dire entre la sortie des portées 48 et les plateformes inter-aubes (non représentées) qui délimitent intérieurement la veine d'écoulement secondaire. L'échasse 36 n'est donc pas configurée pour s'étendre dans un flux d'air.

L'aube 30 est allongée suivant un axe longitudinal Y orthogonal à l'axe X et s'étendant depuis le pied 32 jusqu'à la tête 38. L'axe longitudinal Y est également orthogonal à une direction de corde C (Figure 4) reliant le bord d'attaque 44 au bord de fuite 46.

Ici et dans la suite, on entend par « hauteur d'aube » une distance mesurée selon l'axe Y entre un point de l'aube 30 et la sortie des portées 48. Cette distance est le plus souvent exprimée de manière adimensionnelle, en pourcentage de la distance du bord de tête 47 à la sortie des portées 48.

Comme visible sur la Figure 4, l'aube 30 présente un cœur d'aube 49 au niveau duquel l'épaisseur de l'aube 30 suivant la direction de corde C est maximale. En d'autres termes, l'épaisseur de l'aube 30 va décroissante depuis le cœur d'aube 49 en direction de chacun des bord d'attaque 44 et bord de fuite 46. Le cœur d'aube 49 est en particulier centré sur l'axe longitudinal Y.

Dans l'exemple représenté, l'aube 30 est vrillée autour du cœur d'aube 49, de sorte que la corde C pivote autour de l'axe longitudinal Y en fonction de la hauteur d'aube.

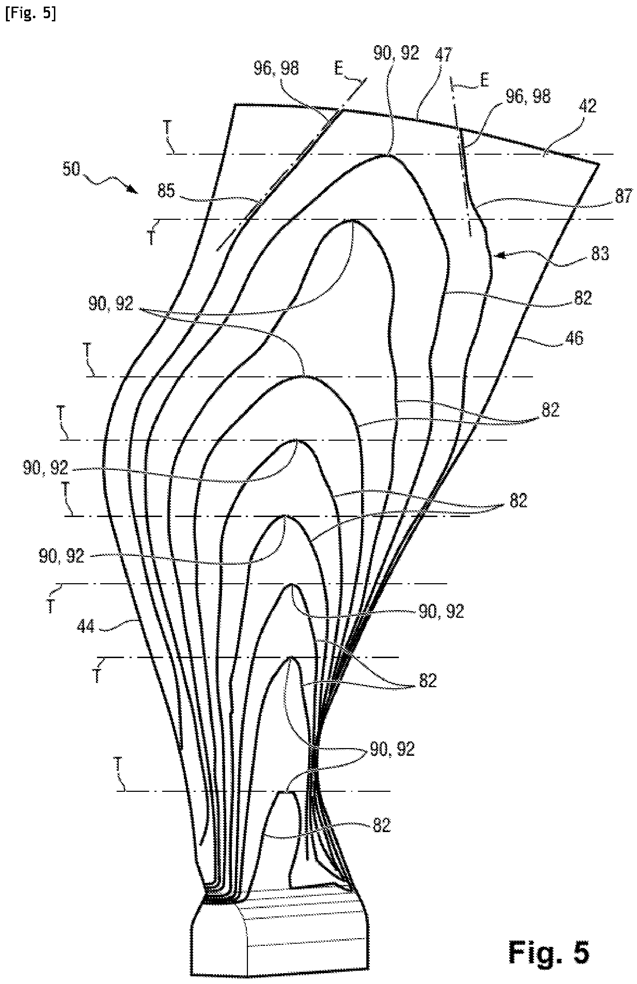

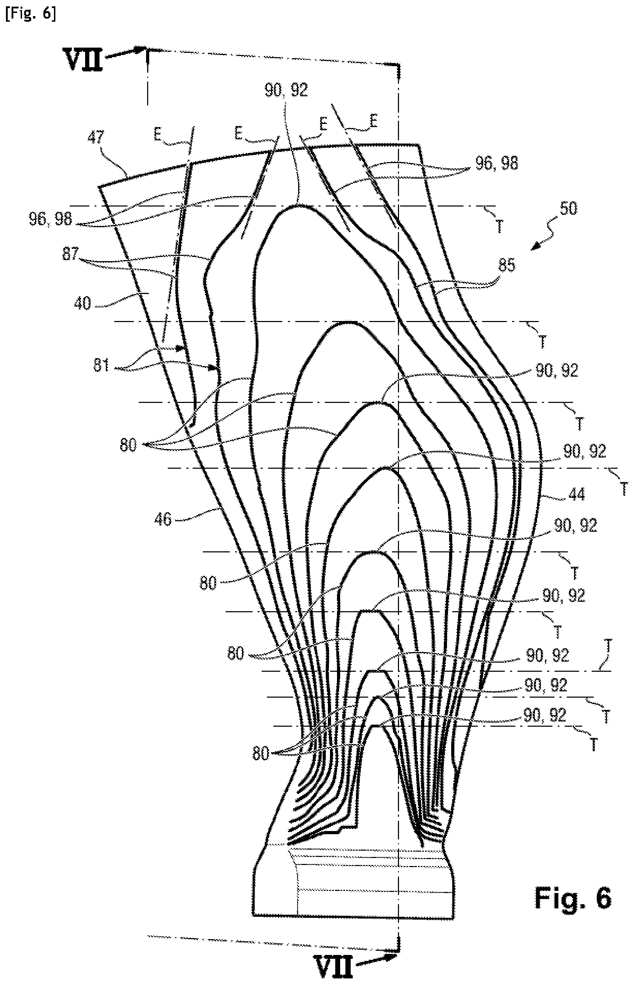

En référence à la Figure 4, l'aube 30 est ici composée d'une structure 50 en matériau composite. Comme visible sur les Figures 5 et 6, cette structure 50 s'étend ici selon l'axe longitudinal Y depuis le pied 32 jusqu'à la tête 38, selon la direction de corde C depuis le bord d'attaque 44 jusqu'au bord de fuite 46 et selon l'épaisseur de l'aube 30 depuis l'intrados 40 jusqu'à l'extrados 42. En particulier, la structure 50 épouse sensiblement la forme de l'aube 30. Optionnellement, elle définit, au moins en partie, la surface extérieure de l'aube 30.

Du fait de cette proximité de forme entre l'aube 30 et la structure 50, on utilisera ici et dans la suite les mêmes termes pour désigner à la fois des régions de surface de l'aube 30 et les éléments de la structure 50 s'y rapportant. Ainsi, le terme « intrados 40 » désigne tout à la fois l'intrados de l'aube 30 lui-même, mais aussi la face de la structure 50 côté intrados, quand bien même cette face ne définit pas directement l'intrados de l'aube 30 (c'est-à-dire même si la face de la structure 50 côté intrados est couverte d'un autre élément). De même, le terme « extrados 42 » désigne tout à la fois l'extrados de l'aube 30 lui-même, mais aussi la face de la structure 50 côté extrados, quand bien même cette face ne définit pas directement l'extrados de l'aube 30 (c'est-à-dire même si la face de la structure 50 côté extrados est couverte d'un autre élément).

La structure 50 est communément appelée « corps » de l'aube 30.

Toujours en référence à la Figure 4, l'aube 30 est ici également composée d'un bouclier 52 rapporté recouvrant la structure composite 50 le long du bord d'attaque 44. Ce bouclier 52 est formé de deux ailettes 54, 55 reliées entre elles au sommet 56 du bouclier 52. Une première ailette 54, disposée du côté de l'intrados 40, définit un bord aval à l'intrados 57 du bouclier 52. La deuxième ailette 55, disposée du côté de l'extrados 42, définit un bord aval à l'extrados 58 du bouclier 52.

Les deux ailettes 54, 55 définissent entre elles une cavité 59 dans laquelle est logée une extrémité amont 60 de la structure 50.

Le bouclier 52 est typiquement constitué d'un clinquant métallique.

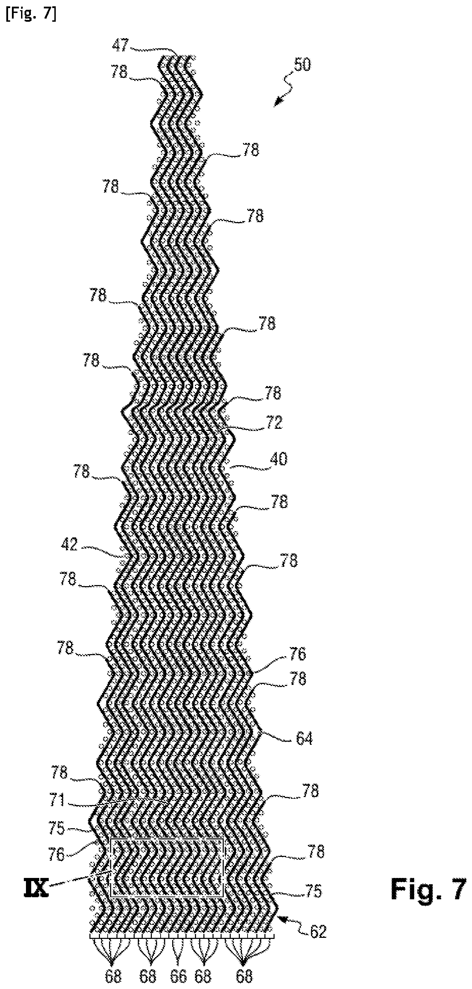

En référence à la Figure 7, la structure 50 comprend un renfort fibreux 62 et une matrice 64 dans laquelle est noyé le renfort fibreux 62.

Le renfort fibreux 62 comprend une pluralité de couches 66, 68 entremêlées, empilées suivant l'épaisseur de l'aube 30, c'est-à-dire suivant la direction allant de l'intrados 40 à l'extrados 42.

Chaque couche 66, 68 est formée de torons de chaîne 71 et de torons de trame 72. Chaque toron de chaîne 71 s'étend depuis le pied 32 vers la tête 38, sensiblement orthogonalement à la direction de corde C. Chaque toron de trame 72 s'étend depuis le cœur d'aube 49 vers chacun des bord d'attaque 44 et bord de fuite 46, sensiblement orthogonalement à l'axe longitudinal Y.

Par « sensiblement orthogonalement », on comprend ici et dans la suite que les torons 70, 72 forment un angle compris entre 85 et 95° avec la direction ou l'axe concerné (ici respectivement la direction de corde C et l'axe longitudinal Y)

Le renfort fibreux 52 est obtenu par tissage tridimensionnel, c'est-à-dire que certains au moins des torons de chaîne 71 appartenant à une couche 66, 68 lient des torons de trame 72 appartenant à une autre couche 66, 68. Des techniques de tissage tridimensionnel sont décrites par exemple dans WO 2006/136755.

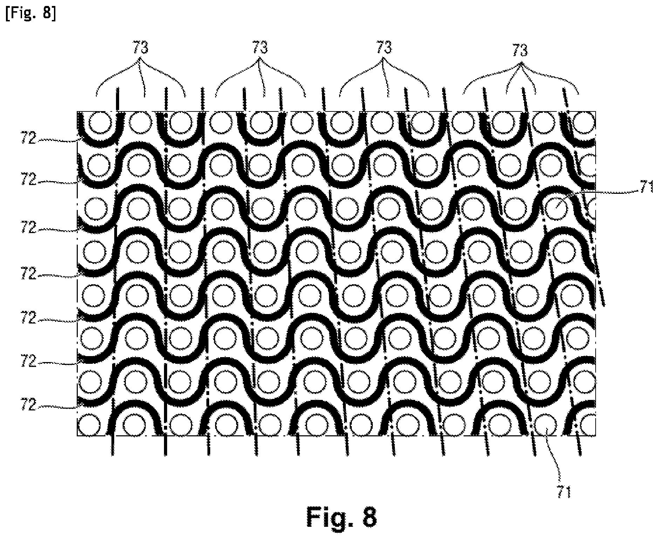

Comme visible sur la Figure 8, les torons de chaîne 71 sont agencés suivant des colonnes de chaîne 73 formées chacune par la juxtaposition, suivant l'épaisseur de l'aube 30, des torons de chaîne 71 des différentes couches 66, 68. Ainsi, chaque colonne de chaîne 73 s'étend suivant une surface grossièrement orthogonale à la direction de corde C. Chaque toron de chaîne 71 appartient à une unique colonne de chaîne 73.

Chaque colonne de chaîne 73 est sensiblement parallèle à ses voisines. En d'autres termes, pour chaque hauteur d'aube, la normale à chaque colonne de chaîne 73 forme un angle inférieur ou égal à 5° avec la normale à chacune de ses voisines.

La vue de la Figure 7 correspond à une coupe dans une colonne de chaîne 73. La figure 7 illustre ainsi l'un des nombreux plans qui se répètent le long de la direction de corde C entre le bord d'attaque 44 et le bord de fuite 46. Les autres plans sont similaires au plan illustré, à la différence près que les torons de chaîne 71 sont décalés suivant la direction longitudinale de telle sorte que les torons de chaîne 71 et les torons de trame 72 sont liés à différentes hauteurs selon les plans.

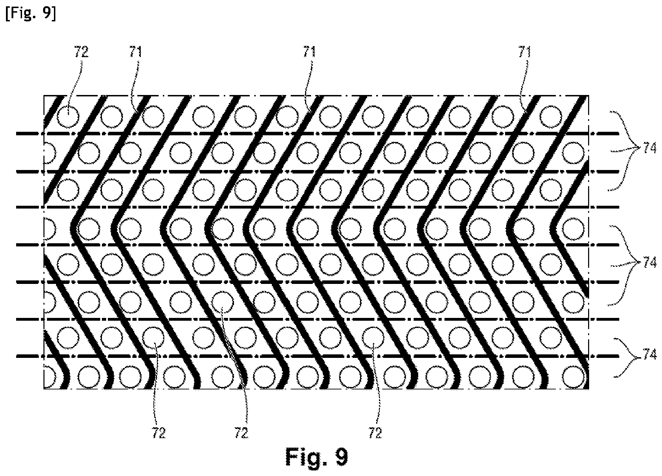

Comme visible sur la Figure 9, les torons de trame 72 sont agencés suivant des colonnes de trame 74 formées chacune par la juxtaposition, suivant l'épaisseur de l'aube 30, des torons de trame 72 des différentes couches 66, 68. Ainsi, chaque colonne de trame 74 s'étend suivant une surface sensiblement orthogonale à l'axe longitudinal Y.

Chaque toron de trame 72 appartient à une unique colonne de trame 74

Chaque colonne de trame 74 est sensiblement parallèle à ses voisines. En d'autres termes, la normale à chaque colonne de trame 74 forme un angle inférieur ou égal à 5° avec la normale à chacune de ses voisines.

Par ailleurs, chaque colonne de trame 74 est sensiblement orthogonale à chaque colonne de chaîne 73, c'est-à-dire que, pour chaque couple colonne trame 74 - colonne de chaîne 73, la normale moyenne à la colonne de trame 74 est sensiblement orthogonale à la normale moyenne à la colonne de chaîne 73.

De retour à la Figure 7, les couches 66, 68 comprennent au moins une couche entière 66, dont chacun des torons de chaîne 71 s'étend du pied 32 jusqu'à la tête 38 et chacun des torons de trame 72 s'étend du bord d'attaque 44 jusqu'au bord de fuite 46, et des couches partielles 68 comprenant des torons de chaîne incomplets 75 et/ou des torons de trame incomplets 76. Les torons de chaîne incomplets 75 sont constitués par des torons de chaîne 71 s'interrompant en surface de la structure 50, avant la tête 38, pour permettre une réduction de l'épaisseur de l'aube 30 suivant l'axe longitudinal Y. Les torons de trame incomplets 76 sont constitués par des torons de trame 72 s'interrompant en surface de la structure 50, avant le bord d'attaque 44 et/ou le bord de fuite 46, pour permettre une réduction de l'épaisseur de l'aube 30 suivant la direction de corde C.

On notera que n'est pas considéré comme constituant un toron incomplet 75, 76 un premier toron 71, 72 qui, bien que s'interrompant à l'intrados 40 ou à l'extrados 42, est prolongé par un deuxième toron 71, 72 débutant sensiblement là où le premier toron 71, 72 s'achève.

Chaque toron incomplet 75, 76 présente au moins une extrémité terminale 78 à l'intrados 40 ou à l'extrados 42. Les extrémités terminales 78 des torons incomplets 75, 76 d'une même couche 68 sont espacées deux à deux d'une distance de l'ordre de la largeur de maille du renfort fibreux 62.

Par « largeur de maille du renfort fibreux 62 », on entend ici et dans la suite la moyenne entre, d'une part, la distance moyenne entre les colonnes de chaîne 73 et, d'autre part, la distance moyenne entre les colonnes de trame 74.

Pour chaque couche partielle 68, les extrémités terminales 78 des torons incomplets 75, 76 la composant sont reliées les unes aux autres par une ligne de sortie de couche 80, 81, 82, 83 (Figures 5 et 6) respective présente à l'intrados 40 ou à l'extrados 42. Cette ligne de sortie de couche 80, 81, 82, 83 est constituée par une courbe de classe au moins C¹ (ou par un ensemble de deux courbes chacune de classe au moins C') parcourant l'intrados 40, respectivement l'extrados 42.

Chaque ligne de sortie de couche 80, 81, 82, 83 forme une délimitation entre deux régions de l'aube (non référencées) : une région intérieure s'étendant entre la ligne de sortie de couche 80, 81, 82, 83 et le pied 32 et une région extérieure s'étendant entre la ligne de sortie de couche 80, 81, 82, 83 et chacun des bords d'attaque 44, bord de fuite 46 et bord de tête 47. La région intérieure présente en chaque point un nombre de torons 71, 72 empilés suivant l'épaisseur de l'aube 30 supérieur ou égal à une première valeur. La région extérieure présente en chaque point un nombre de torons 71, 72 empilés suivant l'épaisseur de l'aube 30 inférieur ou égal à une deuxième valeur strictement inférieure à la première valeur. En d'autres termes, le nombre de torons 71, 72 empilés suivant l'épaisseur de l'aube 30 est plus faible dans la région extérieure que dans la région intérieure.

Ici, le nombre de lignes de sortie de couche 80, 81 à l'intrados 40 est supérieur au nombre de lignes de sortie de couche 82, 83 à l'extrados 42 dans une région basse de l'aube 30 s'étendant depuis le pied 32 jusqu'à 30% de hauteur d'aube. Cette supériorité numérique des lignes de sortie de couche 80, 81 à l'intrados 40 sur les lignes de sortie de couche 82, 83 à l'extrados 42 est encore observée dans une région étendue de l'aube 30 s'étendant depuis le pied 32 jusqu'à 70% de hauteur d'aube et même sur l'ensemble de l'aube 30. En variante (non représentée), la supériorité numérique des lignes de sortie de couche 80, 81 à l'intrados 40 sur les lignes de sortie de couche 82, 83 à l'extrados 42 est observée uniquement dans la région basse de l'aube 30 (c'est-à-dire que le nombre de lignes de sortie de couche 80, 81 à l'intrados 40 est inférieur au nombre de lignes de sortie de couche 82, 83 à l'extrados 42 dans une région intermédiaire de l'aube 30 s'étendant de 30% de hauteur d'aube à 70% de hauteur d'aube) ou uniquement dans les régions basses et étendues de l'aube 30 (c'est-à-dire que le nombre de lignes de sortie de couche 80, 81 à l'intrados 40 est inférieur au nombre de lignes de sortie de couche 82, 83 à l'extrados 42 dans la région s'étendant au-delà de 70% de hauteur d'aube). En variante encore (toujours non représentée), la supériorité numérique des lignes de sortie de couche 80, 81 à l'intrados 40 sur les lignes de sortie de couche 82, 83 à l'extrados 42 est observée dans la région étendue de l'aube 30 mais pas dans la région basse (c'est-à-dire que le nombre de lignes de sortie de couche 80, 81 à l'intrados 40 est inférieur ou égal au nombre de lignes de sortie de couche 82, 83 à l'extrados 42 dans la région basse de l'aube 30 et supérieur au nombre de lignes de sortie de couche 82, 83 à l'extrados 42 dans la région intermédiaire) [à confirmer]*.

Cette caractéristique confère à l'aube 30 une résistance améliorée aux impacts de type « large bird ».

Comme visible sur les Figures 5 et 6, les lignes de sortie de couche 80, 81, 82, 83 incluent des lignes de sortie de couche continues 80, 82 et des lignes de sortie de couche discontinues 81, 83. Chaque ligne de sortie de couche continue 80, 82 est constituée par une unique courbe de classe au moins C¹ parcourant l'intrados 40, respectivement l'extrados 42, depuis le bord d'attaque 44 jusqu'au bord de fuite 46. Chaque ligne de sortie de couche discontinue 81, 83 comprend un premier tronçon 85 constitué d'une courbe de classe au moins C¹ parcourant l'intrados 40, respectivement l'extrados 42, depuis le bord d'attaque 44 jusqu'au bord de tête 47 et un deuxième tronçon 87 constitué d'une courbe de classe au moins C¹ parcourant l'intrados 40, respectivement l'extrados 42, depuis le bord de tête 47 jusqu'au bord de fuite 46.

Chaque ligne de sortie de couche continue 80, 82 présente un sommet (non référencé), constitué par le point de la ligne de sortie de couche 80, 82 le plus éloigné du pied 32.

Chaque ligne de sortie de couche continue 80, 82 inclut au moins une portion transversale 90 s'étendant globalement suivant une direction transversale T sensiblement orthogonale à la tangente locale aux torons de chaîne 71. En d'autres termes, pour chacun des torons de chaîne incomplets 75 débouchant sur la portion transversale 90, la direction transversale T est sensiblement orthogonale au plan localement tangent à la colonne de chaîne 73 à laquelle appartient ledit toron de chaîne incomplet 75, c'est-à-dire au plan tangent à ladite colonne de chaîne 73 au niveau de l'extrémité terminale 78 du toron de chaîne incomplet 75.

Par « s'étend globalement suivant une direction », on comprend ici et dans la suite que l'élément concerné (ici la portion transversale 90) est inclus dans une bande centrée sur ladite direction et de largeur égale au quadruple de la largeur de maille du renfort fibreux 62. En d'autres termes, ladite direction constitue une médiane de l'élément concerné et chaque point dudit élément est distant de ladite direction d'une distance inférieure ou égale au double de la largeur de maille du renfort fibreux 62.

Par « sensiblement orthogonal », on comprend ici et dans la suite que les directions concernées forment entre elles un angle compris entre 85 et 95°.

La direction transversale T est par ailleurs sensiblement parallèle à la tangente locale aux torons de trame 72. En d'autres termes, chacun des torons de trame 72 affleurant l'intrados 40 ou l'extrados 42 le long de la direction transversale T est sensiblement parallèle à ladite direction transversale T sur toute l'extension de la portion transversale 90.

Par « sensiblement parallèle », on comprend ici et dans la suite que les directions concernées forment entre elles un angle inférieur ou égal à 5°.

Une portion transversale 90 de chaque ligne de sortie de couche continue 80, 82 est constituée par une portion de sommet 92 incluant le sommet de ladite ligne de sortie de couche 80, 82. Chaque portion de sommet 92 située entre le pied 32 et 70% de hauteur d'aube s'étend sur au plus 10% de la distance entre le bord d'attaque 44 et le bord de fuite 46 mesurée parallèlement à la direction transversale T.

De manière générale, chaque portion transversale 90 située entre le pied 32 et 70% de hauteur d'aube s'étend sur au plus 10% de la distance entre le bord d'attaque 44 et le bord de fuite 46 mesurée parallèlement à la direction transversale T respective de ladite portion transversale 90.

Cette gestion des emplacements de sortie des torons 71, 72 permet d'en optimiser la robustesse. Ainsi, la résistance de l'aube 30 aux impacts de type « large bird » est renforcée.

Chaque ligne de sortie de couche discontinue 81, 83 comprend au moins une portion terminale 96 qui s'étend depuis la tête d'aube 38, en particulier depuis le bord de tête 47, jusqu'à 90% de hauteur d'aube, avantageusement 60% de hauteur d'aube.

Cette portion terminale 96 s'étend globalement suivant une direction d'extension E formant un angle compris entre 5° et 85° avec la tangente locale aux torons de chaîne 71. En d'autres termes, pour chacun des torons de chaîne incomplets 75 débouchant sur la portion terminale 96, la direction d'extension E forme un angle compris entre 5° et 85° avec le plan localement tangent à la colonne de chaîne 73 à laquelle appartient ledit toron de chaîne incomplet 75, c'est-à-dire avec le plan tangent à ladite colonne de chaîne 73 au niveau de l'extrémité terminale 78 du toron de chaîne incomplet 75.

La direction d'extension E forme également un angle compris entre 5° et 85° avec la tangente locale aux torons de trame 72. En d'autres termes, pour chacun des torons de trame incomplets 76 débouchant sur la portion terminale 96, la direction d'extension E forme un angle compris entre 5° et 85° avec le plan localement tangent à la colonne de trame 74 à laquelle appartient ledit toron de trame incomplet 76, c'est-à-dire avec le plan tangent à ladite colonne de trame 74 au niveau de l'extrémité terminale 78 du toron de trame incomplet 76.

Chaque portion terminale 96 côté intrados 40 remplit également au moins l'un des critères suivants en chacun de ses points :
- la portion terminale 96 est espacée du bord aval à l'intrados 57 du bouclier 52 d'une distance supérieure ou égale au triple de la largeur de maille du renfort fibreux 62, et
- la tangente à la portion terminale 96 forme un angle supérieur ou égal à 5°, avantageusement supérieur ou égal à 15°, avec la tangente audit bord aval à l'intrados 57 à hauteur dudit point.

En d'autres termes, pour toute section d'une portion terminale 96 côté intrados 40 distante du bord aval à l'intrados 57 du bouclier 52 d'une distance inférieure au triple de la largeur de maille du renfort fibreux 62, la tangente à la portion terminale 96 en chaque point de ladite section forme un angle supérieur ou égal à 5°, avantageusement supérieur ou égal à 15°, avec la tangente audit bord aval à l'intrados 57 à hauteur dudit point.

Chaque portion terminale 96 côté extrados 42 remplit également au moins l'un des critères suivants en chacun de ses points :
- la portion terminale 96 est espacée du bord aval à l'extrados 58 du bouclier 52 d'une distance supérieure ou égale au triple de la largeur de maille du renfort fibreux 62, et
- la tangente à la portion terminale 96 forme un angle supérieur ou égal à 5°, avantageusement supérieur ou égal à 15°, avec la tangente audit bord aval à l'extrados 58 à hauteur dudit point.

En d'autres termes, pour toute section d'une portion terminale 96 côté extrados 42 distante du bord aval à l'extrados 58 du bouclier 52 d'une distance inférieure au triple de la largeur de maille du renfort fibreux 62, la tangente à la portion terminale 96 en chaque point de ladite section forme un angle supérieur ou égal à 5°, avantageusement supérieur ou égal à 15°, avec la tangente audit bord aval à l'extrados 58 à hauteur dudit point.

Une majorité desdites portions terminales 96, ici toutes les portions terminales 96, sont constituée par des portions terminales inclinées 98 dont la direction d'extension E forme un angle compris entre 10° et 65°, avantageusement compris entre 15° et 45°, avec la tangente locale aux torons de chaîne 71. En d'autres termes, pour chacun des torons de chaîne incomplets 75 débouchant sur une portion terminale inclinée 98, la direction d'extension E de ladite portion terminale inclinée 98 forme un angle compris entre 10° et 65°, avantageusement compris entre 15° et 45°, avec le plan localement tangent à la colonne de chaîne 73 à laquelle appartient ledit toron de chaîne incomplet 75, c'est-à-dire avec le plan tangent à ladite colonne de chaîne 73 au niveau de l'extrémité terminale 78 du toron de chaîne incomplet 75.

Pour chaque portion terminale inclinée 98, la direction d'extension E forme également un angle compris entre 25° et 80°, avantageusement compris entre 45° et 75°, avec la tangente locale aux torons de trame 72. En d'autres termes, pour chacun des torons de trame incomplets 76 débouchant sur la portion terminale inclinée 98, la direction d'extension E de ladite portion terminal inclinée 98 forme un angle compris entre 25° et 80°, avantageusement compris entre 45° et 75°, avec le plan localement tangent à la colonne de trame 74 à laquelle appartient ledit toron de trame incomplet 76, c'est-à-dire avec le plan tangent à ladite colonne de trame 74 au niveau de l'extrémité terminale 78 du toron de trame incomplet 76.

Ces caractéristiques confèrent à l'aube 30 une résistance renforcée aux impacts de type « small bird ».

Grâce aux caractéristiques du mode de réalisation décrit ci-dessus, le comportement mécanique d'une aube à structure composite en cas d'impact d'oiseau ou de grêlons est amélioré. Cela permet d'affiner l'aube en conservant une résistante constante, et de gagner ainsi en poids et en performances aérodynamiques.

## Revendications

1. Aube (30) pour soufflante de turbomachine, comprenant un pied (32) configuré pour être rattaché à un disque de soufflante (28) et une pale (34) propre à s'étendre dans un flux d'air et définissant une tête d'aube (38) opposée au pied (32), l'aube (30) présentant un intrados (40), un extrados (42), un bord d'attaque (44) et un bord de fuite (46), l'aube (30) étant allongée suivant une direction longitudinale (Y) allant du pied (32) à la tête d'aube (38), ladite direction longitudinale (Y) étant sensiblement orthogonale à une direction de corde (C) allant du bord d'attaque (44) au bord de fuite (46), l'aube (30) étant composée au moins en partie d'une structure (50) en matériau composite comportant un renfort fibreux (62) obtenu par tissage tridimensionnel et une matrice (64) dans laquelle est noyé le renfort fibreux (62), le renfort fibreux (62) comprenant une pluralité de couches (66, 68) entremêlées, chaque couche (66, 68) étant formée de torons de chaîne (71) s'étendant sensiblement orthogonalement à la direction de corde (C) et de torons de trame (72) s'étendant sensiblement orthogonalement à la direction longitudinale (Y), les torons de chaîne (71) et les torons de trame (72) incluant des torons incomplets (75, 76) présentant chacun une extrémité terminale (78) à l'intrados (40) ou à l'extrados (42), l'intrados (40) et/ou l'extrados (42) présentant des lignes de sortie de couche (80, 81, 82, 83) reliant chacune les extrémités terminales (78) des torons incomplets (75, 76) d'une même couche (66, 68),
dans laquelle au moins une ligne de sortie de couche (80, 82) inclut au moins une portion transversale (90) située entre le pied (32) et 70% de hauteur d'aube, dont une portion de sommet (92),
**caractérisée en ce que** la ou chaque portion transversale (90) s'étend globalement suivant une direction transversale (T) sensiblement orthogonale à la tangente locale aux torons de chaîne (71), la ou chaque portion de sommet (92) s'étendant sur au plus 10% de la distance entre le bord d'attaque (44) et le bord de fuite (46) mesurée parallèlement à la direction transversale (T).

2. Aube (30) selon la revendication 1, dans laquelle la ou chaque portion transversale (90) située entre le pied (32) et 70% de hauteur d'aube s'étend sur au plus 10% de la distance entre le bord d'attaque (44) et le bord de fuite (46) mesurée parallèlement à la direction transversale (T).

3. Aube (30) selon la revendication 1 ou 2, dans laquelle le nombre de lignes de sortie de couche (80, 81) à l'intrados (40) est supérieur au nombre de lignes de sortie de couche (82, 83) à l'extrados (42) dans une région basse de l'aube (30) comprise entre le pied (32) et 30% de hauteur d'aube et/ou dans une région étendue de l'aube (30) comprise entre le pied (32) et 70% de hauteur d'aube.

4. Aube (30) selon l'une quelconque des revendications précédentes, dans laquelle le nombre de lignes de sortie de couche (80, 81) à l'intrados (40) est, sur l'ensemble de l'aube (30), supérieur au nombre de lignes de sortie de couche (82, 83) à l'extrados (42).

5. Aube (30) selon l'une quelconque des revendications précédentes, dans laquelle au moins une ligne de sortie de couche (81, 83) comprend une portion terminale (96) qui s'étend depuis la tête d'aube (38) jusqu'à 90% de hauteur d'aube, avantageusement jusqu'à 60% de hauteur d'aube , la ou chaque portion terminale (96) s'étendant globalement suivant une direction d'extension (E) formant un angle compris entre 5° et 85° avec la tangente locale aux torons de chaîne (71).

6. Aube (30) selon la revendication 5, dans laquelle, pour la ou chaque portion terminale (96), la direction d'extension (E) forme un angle compris entre 5° et 85° avec la tangente locale aux torons de trame (72).

7. Aube (30) selon la revendication 5 ou 6, dans la laquelle au moins une portion terminale (96) est constituée par une portion terminale inclinée (98) dont la direction d'extension (E) forme un angle compris entre 10° et 65°, avantageusement compris entre 15° et 45°, avec la tangente locale aux torons de chaîne (71).

8. Aube (30) selon la revendication 7, dans laquelle, pour la ou chaque portion terminale inclinée (98), la direction d'extension (E) forme un angle compris entre 25° et 80°, avantageusement compris entre 45° et 75°, avec la tangente locale aux torons de trame (72).

9. Aube (30) selon la revendication 7 ou 8, dans laquelle une majorité des portions terminales (96) sont constituées par des portions terminales inclinées (98).

10. Aube (30) selon l'une quelconque des revendications 5 à 9, comprenant un bouclier (52) rapporté recouvrant la structure composite (50) le long du bord d'attaque (44), le bouclier (52) présentant un bord aval à l'intrados (57) et un bord aval à l'extrados (58), la ou chaque portion terminale (96) côté intrados (40) remplissant au moins l'un des critères suivants en chacun de ses points :
- la portion terminale (96) est espacée du bord aval à l'intrados (57) d'une distance supérieure ou égale au triple de la largeur de maille du renfort fibreux (62), et
- la tangente à la portion terminale (96) forme un angle supérieur ou égal à 5°, avantageusement supérieur ou égal à 15°, avec la tangente au bord aval à l'intrados (57) à hauteur dudit point,
et la ou chaque portion terminale (96) côté extrados (42) remplissant au moins l'un des critères suivants en chacun de ses points :
- la portion terminale (96) est espacée du bord aval à l'extrados (58) d'une distance supérieure ou égale au triple de la largeur de maille du renfort fibreux (62), et
- la tangente à la portion terminale (96) forme un angle supérieur ou égal à 5°, avantageusement supérieur ou égal à 15°, avec la tangente au bord aval à l'extrados (58) à hauteur dudit point.

11. Aube (30) selon l'une quelconque des revendications précédentes, dans laquelle le pied (32) est configuré pour être inséré dans une alvéole d'un disque de soufflante (28), l'aube (30) comprenant également une échasse (36) reliant le pied (32) à la pale (34).

12. Soufflante de turbomachine (22) comprenant une pluralité d'aubes (30) selon l'une quelconque des revendications précédentes.

13. Turbomachine (12) comprenant une soufflante (22) selon la revendication 12.

14. Aéronef (10) comprenant une turbomachine (12) selon la revendication 13.

## Patentansprüche

1. Schaufel (30) für Turbomaschinengebläse, umfassend einen Fuß (32), der so eingerichtet ist, dass er an einer Gebläsescheibe (28) befestigt werden kann, und ein Schaufelblatt (34), das sich in einem Luftstrom ausdehnen kann und einen dem Fuß (32) gegenüberliegenden Schaufelkopf (38) definiert, wobei das Schaufelblatt (30) eine Saugseite (40), eine Druckseite (42), eine Vorderkante (44) und eine Hinterkante (46) aufweist, wobei das Schaufelblatt (30) in einer Längsrichtung (Y) vom Fuß (32) zum Schaufelkopf (38) verlängert ist, wobei die Längsrichtung (Y) im Wesentlichen orthogonal zu einer Sehnenrichtung (C) von der Vorderkante (44) zur Hinterkante (46) verläuft, wobei das Schaufelblatt (30) mindestens teilweise aus einer Struktur (50) aus Verbundmaterial besteht, die eine durch dreidimensionales Weben erhaltene Faserverstärkung (62) und eine Matrix (64) umfasst, in die die Faserverstärkung (62) eingebettet ist, wobei die Faserverstärkung (62) eine Vielzahl von ineinandergreifenden Schichten (66, 68) umfasst, wobei jede Schicht (66, 68) aus Kettfäden (71), die sich im Wesentlichen orthogonal zur Sehnenrichtung (C) erstrecken, und Schussfäden (72), die sich im Wesentlichen orthogonal zur Längsrichtung (Y) erstrecken, gebildet ist, wobei die Kettfäden (71) und die Schussfäden (72) unvollständige Fäden (75, 76) enthalten, die jeweils ein Abschlussende (78) an der Saugseite (40) oder Druckseite (42) aufweisen, wobei die Saugseite (40) und die Druckseite (42) jeweils mindestens eine Schichtausgangslinie (80, 81, 82, 83) aufweisen, die jeweils die Abschlussenden (78) der unvollständigen Fäden (75, 76) derselben Schicht (66, 68) verbindet,
wobei mindestens eine Schichtausgangslinie (80, 82) mindestens einen Querabschnitt (90) enthält, der sich zwischen dem Fuß (32) und 70 % Schaufelhöhe befindet, einschließlich eines Scheitelabschnitts (92),
**dadurch gekennzeichnet, dass** sich der oder jeder Querabschnitt (90) insgesamt in einer Querrichtung (T) im Wesentlichen orthogonal zur lokalen Tangente zu den Kettfäden (71) erstreckt, wobei sich der oder jeder Scheitelabschnitt (92) über höchstens 10 % des Abstands zwischen der Vorderkante (44) und der Hinterkante (46) erstreckt, gemessen parallel zur Querrichtung (T).

2. Schaufel (30) nach Anspruch 1, wobei sich der oder jeder Querabschnitt (90), der sich zwischen dem Fuß (32) und 70 % der Schaufelhöhe befindet, über höchstens 10 % des Abstands zwischen der Vorderkante (44) und der Hinterkante (46) erstreckt, gemessen parallel zur Querrichtung (T).

3. Schaufel (30) nach Anspruch 1 oder 2, wobei die Anzahl der Schichtausgangslinien (80, 81) an der Saugseite (40) größer ist als die Anzahl der Schichtausgangslinien (82, 83) an der Druckseite (42) in einem unteren Bereich der Schaufel (30) zwischen dem Fuß (32) und 30 % der Schaufelhöhe und/oder in einem ausgedehnten Bereich der Schaufel (30) zwischen dem Fuß (32) und 70 % der Schaufelhöhe.

4. Schaufel (30) nach einem der vorhergehenden Ansprüche, wobei die Anzahl der Schichtausgangslinien (80, 81) an der Saugseite (40) über die gesamte Schaufel (30) größer ist als die Anzahl der Schichtausgangslinien (82, 83) an der Druckseite (42).

5. Schaufel (30) nach einem der vorhergehenden Ansprüche, wobei mindestens eine Schichtausgangslinie (81, 83) einen Endabschnitt (96) umfasst, der sich vom Schaufelkopf (38) bis zu 90 % der Schaufelhöhe, vorteilhafterweise bis zu 60 % der Schaufelhöhe, erstreckt, wobei sich der oder jeder Endabschnitt (96) insgesamt in einer Ausdehnungsrichtung (E) erstreckt, die einen Winkel zwischen 5° und 85° mit der lokalen Tangente zu den Kettfäden (71) bildet.

6. Schaufel (30) nach Anspruch 5, wobei für den oder jeden Endabschnitt (96) die Ausdehnungsrichtung (E) einen Winkel zwischen 5° und 85° mit der lokalen Tangente zu den Schussfäden (72) bildet.

7. Schaufel (30) nach Anspruch 5 oder 6, wobei mindestens ein Endabschnitt (96) aus einem geneigten Endabschnitt (98) besteht, dessen Ausdehnungsrichtung (E) einen Winkel zwischen 10° und 65°, vorteilhafterweise zwischen 15° und 45°, mit der lokalen Tangente zu den Kettfäden (71) bildet.

8. Schaufel (30) nach Anspruch 7, wobei für den oder jeden geneigten Endabschnitt (98) die Ausdehnungsrichtung (E) einen Winkel zwischen 25° und 80°, vorteilhafterweise zwischen 45° und 75°, mit der lokalen Tangente zu den Schussfäden (72) bildet.

9. Schaufel (30) nach Anspruch 7 oder 8, wobei ein Großteil der Endabschnitte (96) aus geneigten Endabschnitten (98) besteht.

10. Schaufel (30) nach einem der Ansprüche 5 bis 9, die ein angebrachtes Schutzschild (52) umfasst, die die Verbundstruktur (50) entlang der Vorderkante (44) abdeckt, wobei das Schutzschild (52) eine stromabwärts liegende Kante auf der Saugseite (57) und eine stromabwärts liegende Kante auf der Druckseite (58) aufweist, wobei der oder jeder Endabschnitt (96) auf der Saugseite (40) an jedem seiner Punkte mindestens eines der folgenden Kriterien erfüllt:
- der Endabschnitt (96) ist von der stromabwärts liegenden Kante zur Saugseite (57) um einen Abstand beabstandet, der größer gleich dem Dreifachen der Maschenbreite der Faserverstärkung (62) ist, und
- die Tangente am Endabschnitt (96) bildet einen Winkel von größer gleich 5°, vorteilhafterweise größer gleich 15°, mit der Tangente zu der stromabwärts liegenden Kante an der Saugseite (57) auf Höhe des Punktes,
und der oder jeder Endabschnitt (96) auf der Druckseite (42) an jedem seiner Punkte mindestens eines der folgenden Kriterien erfüllt:
- der Endabschnitt (96) ist von der stromabwärts liegenden Kante zur Druckseite (58) um einen Abstand beabstandet, der größer gleich dem Dreifachen der Maschenbreite der Faserverstärkung (62) ist, und
- die Tangente am Endabschnitt (96) bildet einen Winkel von größer gleich 5°, vorteilhafterweise größer oder gleich 15°, mit der Tangente zu der stromabwärts liegenden Kante an der Druckseite (58) auf Höhe des Punktes.

11. Schaufel (30) nach einem der vorhergehenden Ansprüche, wobei der Fuß (32) so eingerichtet ist, dass er in eine Mulde einer Gebläsescheibe (28) eingesetzt werden kann, wobei die Schaufel (30) auch einen Steg (36) umfasst, der den Fuß (32) mit der Schaufel (34) verbindet.

12. Turbomaschinengebläse (22), das eine Vielzahl von Schaufeln (30) nach einem der vorhergehenden Ansprüche umfasst.

13. Turbomaschine (12), die ein Gebläse (22) nach Anspruch 12 umfasst.

14. Luftfahrzeug (10), das eine Turbomaschine (12) nach Anspruch 13 umfasst.

## Claims

1. A blade (30) for a turbomachine fan, comprising a root (32) configured to be attached to a fan disk (28) and a vane (34) capable of extending in an air flow and defining a blade head (38) opposite the root (32), the blade (30) having a pressure side (40), a suction side (42), a leading edge (44) and a trailing edge (46), the blade (30) being elongated in a longitudinal direction (Y) extending from the root (32) to the blade head (38), said longitudinal direction (Y) being substantially orthogonal to a chord direction (C) extending from the leading edge (44) to the trailing edge (46), the blade (30) being composed at least in part of a structure (50) made of composite material comprising a fiber reinforcement (62) obtained by three-dimensional weaving and a matrix (64) in which the fiber reinforcement is embedded (62), the fiber reinforcement (62) comprising a plurality of intermingled plies (66, 68), each ply (66, 68) being formed of warp yarns (71) extending substantially orthogonally to the chord direction (C) and weft yarns (72) extending substantially orthogonally to the longitudinal direction (Y), the warp yarns (71) and weft yarns (72) including incomplete yarns (75, 76) that each have a terminal end (78) on the pressure side (40) or the suction side (42), the pressure side (40) and/or the suction side (42) having ply drop lines (80, 81, 82, 83) each connecting the terminal ends (78) of the incomplete yarns (75, 76) of a same ply (66, 68),
wherein at least one ply drop line (80, 82) includes at least one transverse portion (90) located between the root (32) and 70% of the blade height, including an apex portion (92),
**characterized in that** the or each transverse portion (90) extends generally along a transverse direction (T) substantially orthogonal to the local tangent to the warp yarns (71), the or each apex portion (92) extending over at most 10% of the distance between the leading edge (44) and the trailing edge (46) measured parallel to the transverse direction (T).

2. The blade (30) according to claim 1, wherein the or each transverse portion (90) located between the root (32) and 70% of the blade height extends over at most 10% of the distance between the leading edge (44) and the trailing edge (46) measured parallel to the transverse direction (T).

3. The blade (30) according to claim 1 or 2, wherein the number of ply drop lines (80, 81) on the pressure side (40) is greater than the number of ply drop lines (82, 83) on the suction side (42) in a low region of the blade (30) comprised between the root (32) and 30% of the blade height and/or in an extended region of the blade (30) between the root (32) and 70% of the blade height.

4. The blade (30) according to any one of the preceding claims, wherein the number of ply drop lines (80, 81) on the pressure side (40) is, over the entire blade (30), greater than the number of ply drop lines (82, 83) on the suction side (42).

5. The blade (30) according to any one of the preceding claims, wherein at least one ply drop line (81, 83) comprises a terminal portion (96) which extends from the blade head (38) up to 90% of the blade height, advantageously up to 60% of the blade height, the or each terminal portion (96) extending generally in a direction (E) of extension forming an angle comprised between 5° and 85° with the local tangent to the warp yarns (71).

6. The blade (30) according to claim 5, wherein, for the or each terminal portion (96), the direction (E) of extension forms an angle comprised between 5° and 85° with the local tangent to the weft yarns (72).

7. The blade (30) according to claim 5 or 6, wherein at least one terminal portion (96) is constituted by an inclined terminal portion (98) whose direction (E) of extension forms an angle comprised between 10° and 65°, advantageously comprised between 15° and 45° , with the local tangent to the warp yarns (71).

8. The blade (30) according to claim 7, wherein, for the or each inclined terminal portion (98), the direction (E) of extension forms an angle comprised between 25° and 80°, advantageously comprised between 45° and 75°, with the local tangent to the weft yarns (72).

9. The blade (30) according to claim 7 or 8, wherein a majority of the terminal portions (96) are made up of inclined terminal portions (98).

10. The blade (30) according to any one of claims 5 to 9, comprising an added shield (52) covering the composite structure (50) along the leading edge (44), the shield (52) having a downstream edge on the pressure side (57) and a downstream edge on the suction side (58), the or each terminal portion (96) on the pressure side (40) meeting at least one of the following criteria at each of its points:
- the terminal portion (96) is spaced from the downstream edge on the pressure side (57) by a distance greater than or equal to three times the mesh width of the fiber reinforcement (62), and
- the tangent to the terminal portion (96) forms an angle greater than or equal to 5° , advantageously greater than or equal to 15° , with the tangent to the downstream edge on the pressure side (57) at the height of said point,
and the or each terminal portion (96) on the suction side (42) meeting at least one of the following criteria at each of its points:
- the terminal portion (96) is spaced from the downstream edge on the suction side (58) by a distance greater than or equal to three times the mesh width of the fiber reinforcement (62), and
- the tangent to the terminal portion (96) forms an angle greater than or equal to 5° , advantageously greater than or equal to 15° , with the tangent to the downstream edge on the suction side (58) at the height of said point.

11. The blade (30) according to any one of the preceding claims, wherein the root (32) is configured to be inserted into a cell of a fan disk (28), the blade (30) also comprising a stilt (36) connecting the root (32) to the vane (34).

12. A turbomachine fan (22) comprising a plurality of blades (30) according to any one of the preceding claims.

13. A turbomachine (12) comprising a fan (22) according to claim 12.

14. An aircraft (10) comprising a turbomachine (12) according to claim 13.
